(19) Europäisches Patentamt
European Patent Office
Office européen des brevets

(11) **EP 1 952 472 B1**

(12) **EUROPEAN PATENT SPECIFICATION**

(45) Date of publication and mention
of the grant of the patent:
**09.09.2009 Bulletin 2009/37**

(51) Int Cl.:
**H01M 8/04** (2006.01)

(21) Application number: **06730549.0**

(22) Date of filing: **23.03.2006**

(86) International application number:
**PCT/JP2006/306601**

(87) International publication number:
**WO 2007/037027 (05.04.2007 Gazette 2007/14)**

(54) **FUEL CELL AND FUEL CELL SYSTEM**

BRENNSTOFFZELLE UND BRENNSTOFFZELLENSYSTEM

PILE À COMBUSTIBLE ET SYSTÈME DE PILE À COMBUSTIBLE

(84) Designated Contracting States:
**DE FR GB**

(30) Priority: **28.09.2005 JP 2005281655**

(43) Date of publication of application:
**06.08.2008 Bulletin 2008/32**

(73) Proprietor: **Kabushiki Kaisha Toshiba**
**Minato-ku,**
**Tokyo 105-8001 (JP)**

(72) Inventor: **SADAMOTO, Atsushi,**
**c/o Toshiba Corporation**
**Minato-ku, Tokyo 105-8001 (JP)**

(74) Representative: **Maury, Richard Philip**
**Marks & Clerk LLP**
**90 Long Acre**
**London**
**WC2E 9RA (GB)**

(56) References cited:
EP-A- 0 929 112          EP-A- 1 473 790
WO-A- 02/075893          US-A- 5 935 725
US-A- 6 015 633          US-A1- 2003 031 913

• PATENT ABSTRACTS OF JAPAN vol. 1998, no. 11, 30 September 1998 (1998-09-30) & JP 10 172586 A (HONDA MOTOR CO LTD), 26 June 1998 (1998-06-26)

**Description**

Technical Field

The present invention relates to a fuel cell and a fuel cell system.

Background Art

The development of a fuel cell is being promoted as a power source of a portable electronic equipment supporting the information society. The fuel cell is represented by a direct methanol fuel cell (DMFC). The fuel cell is constructed in general as follows.

The fuel cell comprises a membrane electrode assembly (MEA) as an electromotive part. The MEA comprises an electrolyte membrane and electrodes formed on both surfaces of the electrolyte membrane. Each of the electrodes contains a catalyst and a conductive porous material. A set of fuel cell is constructed to include the MEA and a pair of conductive passageway plates having the MEA sandwiched therebetween. Each of the passageway plates is provided with grooves for supplying a fuel or an oxidant, i.e., air in general, to the MEA. A fuel cell stack is prepared by stacking a plurality of fuel cells one upon the other.

If the air and the fuel are supplied to the fuel cell, chemical reactions are performed within the fuel cell so as to make it possible to take out an electric power. The air is supplied to the fuel cell by using an air pump, and the fuel is supplied to the fuel cell by using a circulating fuel pump. A mixed solution prepared by mixing alcohol such as methanol, ethanol or propanol with water is used as the fuel. Where, for example, a methanol aqueous solution is used as the fuel, the reaction carried out in the fuel electrode, i.e., the anode, of the fuel cell is represented by reaction formula (1) given below:

$$CH_3OH + H_2O \rightarrow CO_2 + 6H^+ + 6e^- \qquad (1)$$

On the other hand, the reaction carried out in the oxidant electrode, i.e., the cathode, is represented by reaction formula (2) given below:

$$O_2 + 4H^+ + 4e^- \rightarrow 2H_2O \qquad (2)$$

The electrolyte membrane used in the fuel cell permits selectively transmitting protons ($H^+$). The electrons generated on the anode pass through electronic equipment as the load of the fuel cell so as to arrive at the cathode. In this fashion, the reaction is established. In conclusion, the total reaction represents the reaction that is carried out among methanol, water and oxygen so as to generate carbon dioxide and water.

As described above, the fuel cell represents an apparatus to which the fuel and the air are supplied so as to take out electric power while discharging the produced substance and heat to the outside. Therefore, in order to maintain a high output, it is very important to permit the flow of the substance to be carried out smoothly. The detrimental effects given by the inconvenience in the flow of the substance to the power generation are mainly as follows.

Specifically, if the flow rates of the air and the fuel are insufficient, the substances required for the reaction are not supplied sufficiently so as to lower the output. On the contrary, where the fuel flow rate is excessively high, the fuel passes through the electrolyte membrane so as to reach the cathode, which is called a cross-over phenomenon, as a result the electromotive force of the fuel cell tends to be lowered. Also, where the air flow rate is excessively high, the electrolyte membrane included in the MEA is dried and, in addition, the temperature of the electrolyte membrane is lowered so as to lower the output. That is to say, it is important in the fuel cell to control appropriately the flow rates of the air and the fuel in order to obtain a high output stably.

In the general DMFC, a large amount of water is generated on the oxidant electrode. The water includes the water generated on the oxidant electrode and, in addition, the water passing from the fuel electrode side toward the oxidant electrode side. When it comes to the DMFC having an output of, for example, 2 W, water is generated at a rate of about 10 cc per an hour on the oxidant electrode. The air is supplied to the oxidant electrode by using a passageway plate provided with a plurality of grooves. The air passageway (groove) has a very small cross section of, for example, about 1 mm × 1 mm. Therefore, the water generated on the oxidant electrode or passing from the fuel electrode side are condensed in the air passageway. As a result, water droplets are formed in the air passageway so as to clog the air passageway frequently. Such being the situation, it is possible for the stable supply of the air to be inhibited.

For example, the technology disclosed in each of Japanese Patent Application (KOKAI) No. 11-97041 and Japanese Patent Application (KOKAI) No. 2002-20690 is intended to prevent the gas passageway included in the fuel cell from being clogged with water.

Specifically, Japanese Patent Application (KOKAI) No. 11-97041 quoted above is directed to a polymer electrolyte fuel cell of the type that hydrogen gas is used as the fuel. In fuel cell disclosed in this prior art, a hydrophilic region and a water-repellent region are formed in the wall of the gas passageway. In this fuel cell, the water droplet is repelled by the water-repellent region so as to secure the gas passageway on the anode side.

Japanese Patent Application (KOKAI) No. 2002-20690 quoted above is directed to a polymer electrolyte fuel cell of the type that a gaseous fuel is supplied to the anode. In this fuel cell, a hydrophilic coating is formed on the wall defining the gas passageway. In this fuel cell, the water droplet is expanded by the hydrophilic coating so as to form a thin water layer, thereby securing the gas passageway.

In the polymer electrolyte fuel cells quoted above, it is certainly possible to decrease the clogging of the fluid passageway caused by the water droplet generated in the fuel gas passageway. However, in the case of applying to the air passageway the hydrophilic region and the water-repellent region disclosed in Japanese Patent Application (KOKAI) No. 11-97041 and the hydrophilic coating disclosed in Japanese Patent Application (KOKAI) No. 2002-20690, the MEA is deprived of water in an amount larger than required so as to give rise to the problem that the output characteristics of the fuel cell are lowered.

EP-A-0 929 112 discloses a solid polymer fuel cell which has a cathode flow field plate comprising coolant channels, air distribution holes and reactant channels. The air is supplied through the coolant channels and distribution holes. In the reactant channels of the cathode flow field plate hydrophilic strips are provided. These strips are in contact with the bottom and the side walls of the channels but are spaced apart from the cathode. Preferably, the strips are made from fibreglass filter paper.

US-A-5 935 725 teaches a fuel cell having a flow facilitator located in the cathode channels of the cathode flow field which functions as a wick to drain fluid from the cathode channels. The flow facilitator is not in contact with the cathode. The flow facilitator preferably is a thread, which may be made from polyester.

US-A-6 015 633 describes a fuel cell having a fluid flow plate which comprises a porous portion. The flow field plate has one channel in a serpentine configuration. The porous portion defines an outer lateral portion of the turns of the channel. The structure can be used for removing water on the cathode side. The turns may be or may be not disposed within the active area of the flow field plate. In any case it is separated from the cathode by gas diffusion layer. The porous portion may be made from a cloth or a coating.

JP 10 172586 discloses to provide a water-absorbing polymer sheet within the channels of the cathode flow field plate in such a way that the sheet is in contact with one of the sidewalls and the bottom of the channels.

Disclosure of Invention

An object of the present invention is to provide a fuel cell and a fuel cell system, which permit suppressing the clogging of the air passageway with water droplets and also permit exhibiting excellent output characteristics.

According to an aspect of the present invention, there is provided a fuel cell, comprising:

an anode;
a cathode;
an electrolyte membrane arranged between the anode and the cathode;
a cathode passageway plate for supplying the air to the cathode, including a groove which forms an air passageway together with the cathode;
a hydrophilic member arranged on the inside surface of the groove and being apart from the cathode; and
a hydrophilic auxiliary member arranged on at least the air outlet side of the air passageway and extending from a part of the edge of the hydrophilic member so as to be brought into contact with the cathode.

According to another aspect of the present invention, there is provided a fuel cell system comprising:

a fuel cell including an anode, a cathode, an electrolyte membrane arranged between the anode and the cathode, a cathode passageway plate for supplying the air to the cathode, including a groove which forms an air passageway together with the cathode, and a hydrophilic member arranged on the inside surface of the groove and being apart from the cathode;
a fuel supply source;
a fuel supply means for supplying a liquid fuel from the fuel supply source into the anode;
an air supply means for supplying the air to the cathode passageway plate;
an external circuit for taking out the electric power from the fuel cell; and
a hydrophilic auxiliary member arranged on at least the air outlet side of the air passageway and extending from a part of the edge of the hydrophilic member so as to be brought into contact with the cathode.

Brief Description of Drawings

FIG. 1A is a cross-sectional view schematically showing the construction of a fuel cell

FIG. 1B is a cross-sectional view along the line IB-IB shown in FIG. 1A schematically showing the construction of the fuel cell shown in FIG. 1A;

FIG. 2A is a plan view showing the construction of a conventional air passageway that is not equipped with a hydrophilic member;

FIG. 2B is a plan view showing the construction of the air passageway provided with a hydrophilic member;

FIG. 3A is a cross-sectional view along the line IIIA-IIIA shown in FIG. 2A showing the construction of the air passageway;

FIG. 3B is a cross-sectional view along the line. IIIB-IIIB shown in FIG. 2B showing the construction of the air passageway;

FIG. 3C is a cross-sectional view along the line IIIC-IIIC shown in FIG. 2A showing the construction of the air passageway;

FIG. 3D is a cross-sectional view along the line IIID-IIID shown in FIG. 2B showing the construction of the air passageway;

FIG. 4A is cross-sectional view showing a water-repellent member;

FIG. 4B is a cross-sectional view showing a hydrophilic member;

FIG. 4C is a cross-sectional view showing a hydrophilic member having hydrophilicity higher than that of the hydrophilic member shown in FIG. 4B;

FIG. 5A conceptually shows the surface state of the water-repellent member;

FIG. 5B conceptually shows the surface state of the hydrophilic member;

FIG. 6 is a perspective oblique view schematically showing in a perspective fashion the inside region of the air passageway having a hydrophilic member arranged on the bottom surface and the side surface of the air passageway;

FIG. 7 is a perspective oblique view showing the construction of the air passageway having a hydrophilic auxiliary member equipped therewith;

FIG. 8A is a cross-sectional view showing the wet state of the conventional air passageway that is not equipped with any of a hydrophilic member and a hydrophilic auxiliary member;

FIG. 8B is a cross-sectional view along the line XIIIB-XIIIB shown in FIG. 8A showing the state of the air passageway;

FIG. 9 is a perspective oblique view showing the construction of an air passageway equipped with a plurality of hydrophilic auxiliary members;

FIG. 10A is an oblique view showing the construction of a fuel cell equipped with a cathode passageway plate having a single long passageway formed therein;

FIG. 10B is an oblique view showing in a dismantled fashion the construction of the fuel cell shown in FIG. 10A;

FIG. 11A is an oblique view showing the construction of a fuel cell stack;

FIG. 11B is a cross-sectional view along the line XIB-XIB shown in FIG. 11A showing the construction of a separator included in the fuel cell stack;

FIG. 12 schematically shows the construction of an example of a fuel cell system;

FIG. 13 schematically shows the construction of another example of the fuel cell system;

FIG. 14 schematically shows the construction of still another example of the fuel cell system;

FIG. 15A is a plan view showing the construction of a cathode passageway plate having a plurality of parallel passageways formed therein;

FIG. 15B is a side view showing the construction of the cathode passageway plate shown in FIG. 15A as viewed in the direction denoted by a white arrow;

FIG. 15C is a plan view showing the construction of a cathode passageway plate having two parallel passageways formed therein;

FIG. 15D is a side view showing the construction of the cathode passageway plate shown in FIG. 15C as viewed in the direction denoted by a white arrow;

FIG. 16 is a graph showing the output history of the fuel cell for each of the Examples; and

FIG. 17 is graph showing the output history of the fuel cell for each of the Comparative Examples.

Best Mode for Carrying Out the Invention

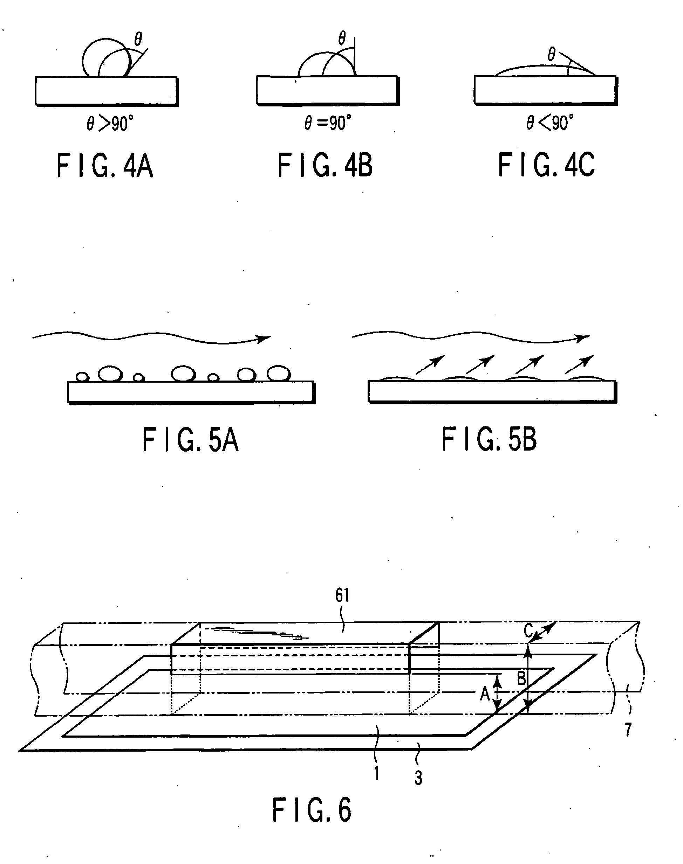

As a result of an extensive research conducted in an effort to overcome the problems described above, the present inventors have arrived at an important finding. The finding will now be described with reference to FIGS. 4 and 5. The waved arrow shown in FIG. 5 denotes the flow direction of the air, and the straight arrow denotes the flow direction of the moisture.

The term "hydrophilicity" denotes the state that the contact angle θ of the water droplet is 90° as shown in FIG. 4B or smaller than 90° as shown in FIG. 4C. On the other hand, the surface of carbon, which is a general material used for forming the passageway plate for the fuel cell, is "water-repellent". Naturally, a passageway plate formed of carbon repels water. Even if a water droplet is attached to the passageway plate formed of carbon, the contact angle θ of the water droplet exceeds 90° as shown in FIG. 4A. If water is repelled, the repellency seems to be convenient for securing the passageway of the gas. However, the water in the form of a water droplet is moved by the external force, is evaporated from the surface of the water droplet or remains in the site where the water droplet is attached as shown in FIG. 5A. Concerning the means for moving the water droplet, it is conceivable to blow away the water droplet by utilizing a gas stream. The liquid droplet clogging the pipe can be blown away easily by the air stream compressed by a compressor or a blower.

However, where the fluid passageway is not closed completely and the space in the vicinity of the water droplet is left open, i.e., where the air stream is scarcely affected even if the water droplet is not moved, it is difficult to blow away the water droplet unless a gas flow of a considerably high flow speed is applied to the water droplet. It should also be noted that the water droplet has a large thickness in spite of a small contact area with the wall surface and has a small contact area with the ambient air. Such being the situation, the water in the form of a water droplet has a low evaporation rate. It follows that the removal of the water droplet is made more and more difficult.

The evaporation rate can be increased if the thickness of the water droplet attached to the solid wall surface is made smaller, as shown in FIG. 5B. The water vapor in the air passageway is condensed on the wall surface so as to form a water droplet. If a hydrophilic member such as an unwoven fabric is provided to the wall of the air passageway, the water droplet is attracted by the hydrophilic member so as to be made thinner and expanded. As a result, the contact area between the water droplet and the air is increased. In addition, since the thickness of the water droplet is decreased, the evaporation of the water droplet is promoted. In this case, the hydrophilic member should be arranged not in direct contact with the cathode. As a result, the water within the MEA is not deprived of in an amount larger than required so as to maintain a high output stably.

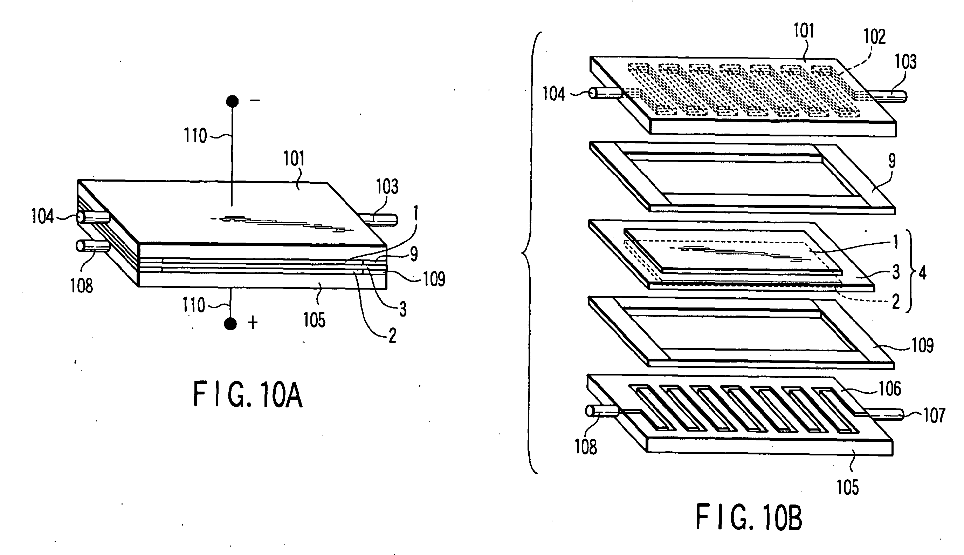

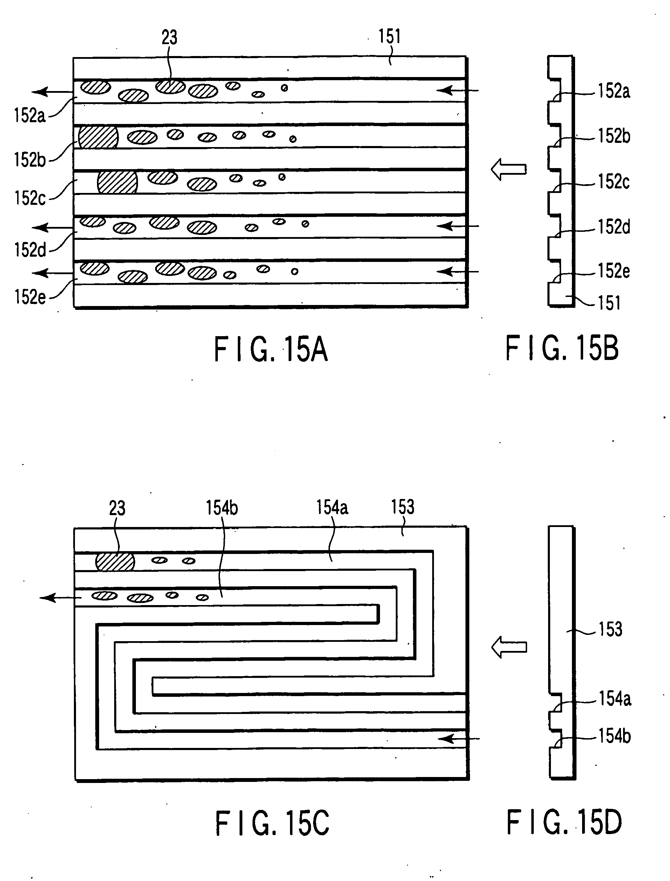

It is possible to construct the cathode passageway plate included in the fuel cell in a manner to include a plurality of short passageways arranged in parallel as shown in FIG. 15 in place of the construction shown in FIG. 10 that a single long passageway is formed in a manner to meander within a plane. In the case of forming a plurality of short passageways arranged in parallel, it is possible to supply the air uniformly to the electromotive part under the state that the pressure loss is made as small as possible. It is also necessary to control the air flow rate so as not to deprive the electrolyte membrane incorporated in the MEA of water excessively, so as not to cause the temperature to be lowered excessively, and so as to supply oxygen in an amount sufficient for the reaction. If the flow rate of the air flowing within the cathode passageway plate is lowered, the generated water forms a dew in the passageway so as to close the passageway. In the case of using a single long passageway, it is possible to blow away the water droplet closing the passageway by the pressure of the pump for blowing the air. On the other hand, where a plurality of short passageways are arranged in parallel, it is difficult to blow away the water droplet. It is difficult to make the water droplet once formed by condensation disappear and, thus, it is difficult to eliminate the clogging of the fluid passageway. As a result, the air fails to flow through some of the passageways so as to cause lowered output of the fuel cell. Particularly, the air containing water is discharged to the air passageway. As a result, all the water generated in the MEA is collected in the downstream region of the air passageway and, thus, the air'passageway tends to be clogged. In the prior art, in order to overcome the difficulty, it was necessary to select the operating conditions that prevent the water from being condensed or to use a single long passageway such that the water within the passageway is pushed out by the pressure of the pump.

According to the embodiment of the present invention, however, it is possible to prevent the clogging caused by the condensation of water no matter whether the air passageway may be formed of a single long passageway or a plurality of short passageways arranged in parallel. It follows that the present invention makes it possible to provide a fuel cell that permits exhibiting excellent output characteristics without selecting the operating conditions.

One embodiment of the present invention will now be described with reference to the accompanying drawings. Incidentally, the components of the invention exhibiting the same or similar functions are denoted by the same reference numerals in the accompanying drawings so as to avoid the overlapping description.

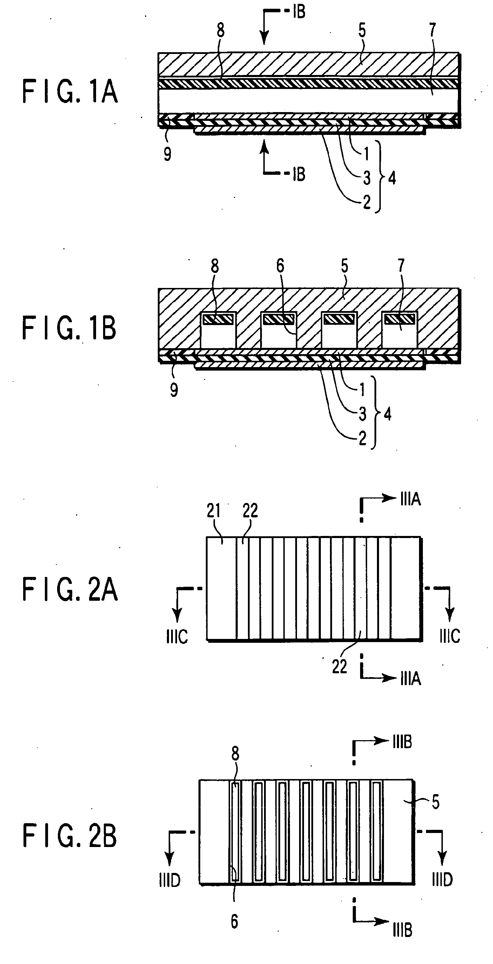

FIG. 1A is a cross-sectional view schematically showing the construction of a fuel cell according to one embodiment of the present invention, and FIG. 1B is a cross-sectional view along the line IB-IB shown in FIG. 1A schematically showing the construction of the fuel cell.

The fuel cell shown in FIG. 1 comprises an MEA 4 including a cathode 1, an anode 2 and an electrolyte membrane 3 arranged between the cathode 1 and the anode 2. A cathode passageway plate 5 is arranged on the cathode 1 on the side opposite to the side on which the electrolyte membrane 3 is arranged. In other words, the cathode 1 is sandwiched between the cathode passageway plate 5 and the electrolyte membrane 3. A gasket 9 described herein later is interposed between the peripheral portion of the cathode 1 included in the MEA 4 and the cathode passageway plate 5. Also, an anode passageway plate (not shown) is arranged on the anode 2 on the side opposite to the side on

EP 1 952 472 B1

which the electrolyte membrane 3 is arranged. In other words, the anode 2 is sandwiched between the anode passageway plate and the electrolyte membrane 3. The anode passageway plate is arranged for supplying a liquid fuel to the anode 2.

A plurality of grooves 6 arranged in parallel are formed on that surface of the cathode passageway plate 5 that is positioned to face the cathode 1. These grooves 6 are formed in a manner to extend from one edge to the other edge of the cathode passageway plate 5. By bringing the open surface of the cathode passageway plate 5 having the groove 6 formed therein into contact with the cathode 1, an air passageway 7 is formed by the groove 6 and the cathode 1. If the air is supplied from one edge of the air passageway 7, the air is supplied from the open portion of the groove 6 into the cathode 1. A hydrophilic member 8 is provided in that inside region of the air passageway 7, which is apart from the cathode 1. The hydrophilic member 8 is provided in that region of the wall surface of the air passageway 7, which is not in direct contact with the electromotive part 4. Preferably, the hydrophilic member 8 is provided in the region corresponding to the bottom surface of the air passageway 7, i.e., that surface of the groove 6 which is positioned to face the cathode 1 as shown in FIG. 1.

The reasons for arranging the hydrophilic member not in direct contact with the electromotive part are as follows.

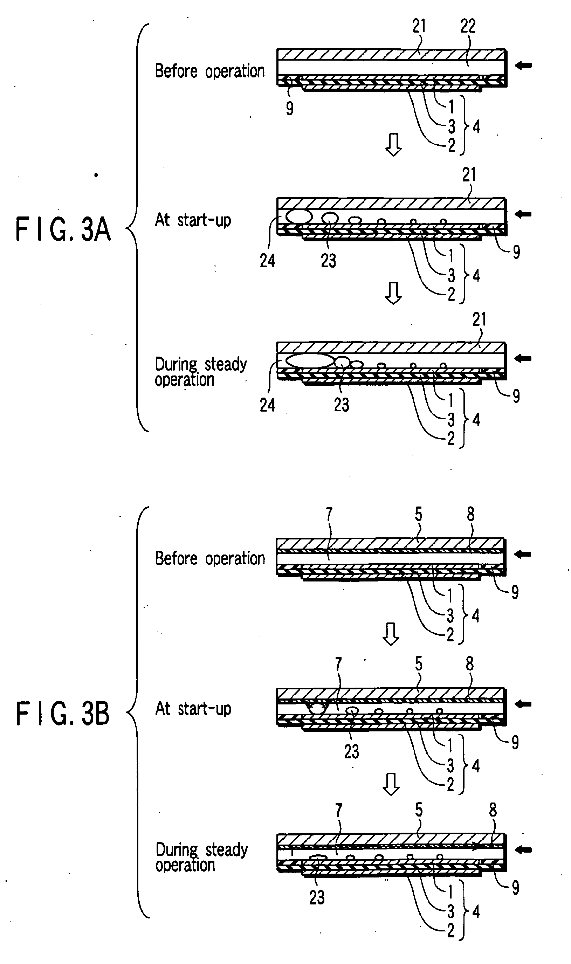

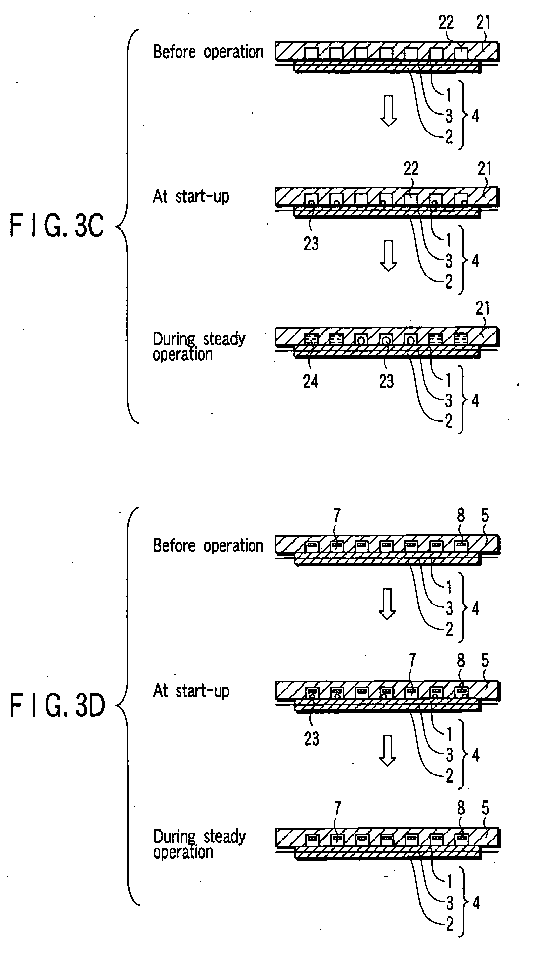

Specifically, if a.hydrophilic member is formed on the wall of the air passageway in a manner to contact the electromotive part like the hydrophilic region disclosed in Japanese Patent Application (KOKAI) No. 11-97041 and the hydrophilic coating disclosed in Japanese Patent Application (KOKAI) No. 2002-20690 quoted previously, the water on the gas diffusion layer (GDL) of the cathode is sucked up excessively by the hydrophilic member such as an unwoven fabric so as to make the wet state of the membrane nonuniform. As a result, the electric resistance of the membrane and the distribution of the water required for the reaction are made nonuniform so as to lower the output characteristics of the fuel cell. On the other hand, if the hydrophilic member is formed not in direct contact with the electromotive part, the electromotive part is not deprived of an excessively large amount of water and it is possible to remove effectively the excess water that is to be condensed in the air passageway and results in the water droplet clogging the air passageway. An example of the phenomenon described above will now be described with reference to FIGS. 2 and 3. Each of FIGS. 3A to 3D shows the flow of the state of the fuel cell before operation, at the start-up of the operation, and during the steady operation. In FIG. 3, the black broad arrow denotes the flow direction of the air stream, and the thin arrow denotes the flow direction of moisture.

FIG. 2A shows the air passageway 22 that is not provided with a hydrophilic member. In this case, if the operation of the fuel cell is started, an excess water begins to be condensed soon after the start-up of the operation as shown in FIGS. 3A and 3C. As a result, water droplets 23 are generated, with the result that the air passageway is clogged by the water droplets 23 before the fuel cell is put to the steady operation. A reference numeral 24 shown in FIG. 3 denotes the air passageway clogged by the water droplets 23. On the other hand, FIG. 2B shows the air passageway 7 in which the hydrophilic member 8 is formed not in direct contact with the electromotive part. In this case, the water droplets 23 rapidly grow to clog the fluid passageway 7 at the start-up of the fuel cell, as shown in FIGS. 3B and 3D. However, the water droplet 23 is sucked by the hydrophilic member 8 so as to be spread instantly one edge of the water droplet 23 is brought into contact with the hydrophilic member 8, with the result that the air passageway 7 is prevented from being clogged even during the steady operation of the fuel cell. The model of repeating the growth and movement of the water droplet as shown in FIGS. 3B and 3D can be understood by intuition. However, the phenomenon of the growth and movement of the water droplet was not actually observed clearly. In practice, the air passageway shown in FIG. 2B seems to produce the function of suppressing the growth of the water droplet. At the vicinity of the wall surface, it seems that the moisture is carried by the hydrophilic member before the water vapor is saturated and the water diffusion is generated in the air flow direction. As a result, the water condensation seems to be suppressed in the vicinity of the wall surface. It is desirable for the hydrophilic member to be arranged to extend from the inlet to the outlet of the passageway, as shown in FIG. 2B. Incidentally, the MEA is omitted from the drawing of FIG. 2.

Further, it is possible for the air passageway shown in FIG. 2B to produce the effect described in the following.

Specifically, the excess water can be discharged by the evaporation of the water that is transmitted along the hydrophilic member and expanded during the transmission. In addition, the cooling within the air passageway is promoted by the heat absorption accompanying the evaporation. Further, the humidity within the air passageway can be made uniform by the water that is transmitted along the hydrophilic member and expanded during the transmission. In other words, it is possible to humidify the upstream side of the air passageway that is under a dried state, compared with the downstream side. Particularly, it is possible to humidify the region in the vicinity of the inlet of the air passageway. Also, by discharging the excess water, the saturation ratio of the GDL can be made uniform.

As a result, it is possible to elevate the planar average saturation ratio so as to permit the electrolyte membrane to maintain the required humidity.

The hydrophilic member used in the embodiment of the present invention includes, for example, an unwoven fabric, a woven fabric and knit fabric, a hydrophilic coating, and a hydrophilic film. Particularly, it is desirable to use an unwoven fabric, which is excellent in the hydrophilicity, as the hydrophilic member. The materials of the unwoven fabric include, for example, cellulose, rayon, vinylon, polyester, aramid, and nylon. Particularly, it is desirable to use rayon, cellulose, and polyester, which are prominently excellent in the hydrophilicity, as the materials of the unwoven fabric.

The materials equal to those of the unwoven fabric can be used as the materials of the woven fabric and knit fabric. It is also possible to use an unwoven fabric or paper formed of vegetable fibers such as Japanese paper or an unwoven fabric formed of glass fibers. These unwoven fabrics can be cut into a prescribed size by, for example, laser in accordance with the bottom surface of the passageway. Since water need not be stored in the unwoven fabric, the unwoven fabric need not have a large thickness. Thickness of the unwoven fabric is typically not larger than 1/10 the depth of the groove defining the air passageway. It is also possible to use a thin wooden piece or glass as the hydrophilic member.

The hydrophilic film used in the embodiment of the present invention includes, for example, an electrolyte membrane used in the MEA.

The hydrophilic member can be mounted by using adhesive tape or an adhesive, or can be mounted by the heat sealing, the press by using a fixing member, or the insert molding. It is possible to apply, for example, the adhesive to the entire region of the hydrophilic member. Alternatively, it is possible to fix the hydrophilic member to the bottom surface of the air passageway by point-fixing one edge portion and the other edge portion of the hydrophilic member by using, for example, an adhesive. The fixing member used in the embodiment of the present invention includes, for example, a spring and a pin. Alternatively, in the case of using the fixing member, it is also possible to pull one edge portion and the other edge portion of the hydrophilic member in opposite directions so as to fix the hydrophilic member by utilizing the tension. When it comes to the insert molding, for example, a material of the hydrophilic member is arranged in advance in a portion forming the bottom surface of the air passageway in the step of molding the air passageway, and the air passageway formation by using the mold and the adhesion of the hydrophilic member are carried out simultaneously.

The hydrophilic coating includes, for example, a titanium oxide film and a glass-based inorganic film. The glass-based inorganic film includes, for example, a silica film ($SiO_2$ film).

The effect similar to that described previously can also be obtained by forming asperities on the surface of a solid. It should be noted, however, that it is necessary for at least the surface of the raw material of the solid before formation of the asperities to be hydrophilic. The degree of the hydrophilicity is increased by forming the asperities on the surface of the raw material.

FIGS. 1 to 3 are directed to the air passageway having the hydrophilic member mounted to the bottom surface alone of the passageway. However, the embodiment of the present invention is not limited to that shown in FIGS. 1 to 3. Specifically, it is also possible to mount the hydrophilic member to the side wall surface of the air passageway as well as to the bottom surface of the air passageway. FIG. 6 shows an air passageway having the hydrophilic member provided to a part of the side-wall surface as well as the bottom surface of the passageway.

As shown in FIG. 6, a hydrophilic member 61 is mounted to the air passageway 7 in a manner to cover not only the bottom surface of the air passageway but also a part of the side-wall surface of the air passageway (a part of the side surface of the groove formed in the cathode passageway plate), with a free region, where is not covered with the hydrophilic member, provided between the hydrophilic member 61 and the cathode 1. In the drawing, the air passageway is denoted by broken lines and the hydrophilic member and the electromotive part are denoted by solid lines.

As described previously, the hydrophilic member should be arranged not in direct contact with the cathode in the embodiment of the present invention. In other words, the hydrophilic member should be arranged apart from the cathode 1. Formula (3) given below relates to distance A (mm) (or height) of the free region noted above where is not covered with the hydrophilic member, i.e., the distance between the open upper edge of the groove and the upper edge of the hydrophilic member covering the side-wall surface of the groove. In the embodiment of the present invention, the distance A (mm) is defined by formula (3) given below:

$$A \geqq 0{,}1 \times B \qquad\qquad \dots (3)$$

where B denotes the depth (mm) of the groove formed in the cathode passageway plate.

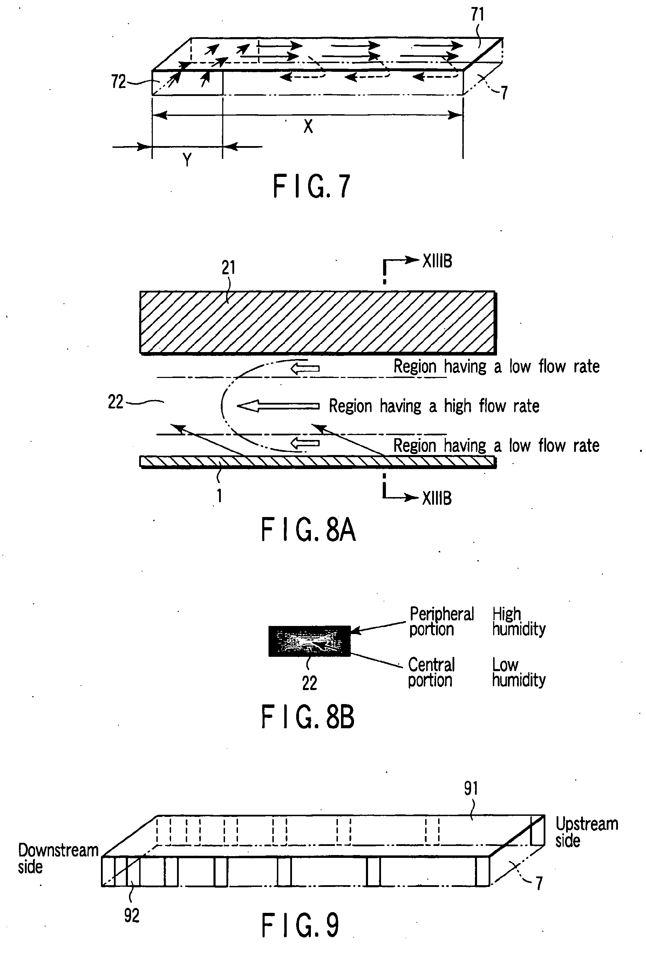

It is possible to mount to the air passageway a hydrophilic auxiliary member extending from a part of the periphery of the hydrophilic member so as to be brought into contact with the cathode. The hydrophilic auxiliary member will now be described with reference to FIGS. 7 and 8.

As shown in FIG. 7, a hydrophilic member 71 is mounted to the bottom surface of the air passageway 7. Also, a hydrophilic auxiliary member 72 is mounted to the outlet side of the air passageway 7. One side of the hydrophilic auxiliary member 72 is in contact with the hydrophilic member 71 and the opposite side is in contact with the cathode 1. The cathode 1 is positioned below the air passageway 7 in FIG. 7. Incidentally, in FIG. 7, the air passageway is denoted by broken lines, and the hydrophilic member and the hydrophilic auxiliary member are denoted by solid lines. The arrows in FIG. 7 denote the flow direction of moisture.

In the fuel cell, it is possible to lower the internal resistance of the electrolyte membrane so as to maintain good output characteristics of the fuel cell by sufficiently wetting the electrolyte membrane. On the cathode side, the humidity of the upstream portion (inlet side) of the air passageway tends to be lower than the humidity of the downstream portion (outlet side). Therefore, water tends to be evaporated in a relatively large amount by the electrolyte membrane in the upstream portion of the air passageway so as to lower the output characteristics of the fuel cell. If the hydrophilic auxiliary member 72 is mounted to at least the outlet side of the air passageway 7 as shown in FIG. 7, it is possible to permit the excess water in the GDL to flow toward the inlet side of the air passageway so as to humidify the dried air on the inlet side. As a result, it is possible to make optimum the wet state of the MEA including the region on the upstream side.

In the central portion along the axis of the air passageway 22, the air flows mainly not in contact with the wall and, thus, the flow rate is relatively high as shown in FIG. 8A. Also, in the central portion along the axis of the air passageway 22, the humidity is low as shown in FIG. 8B. In order to supply water vapor to the portion having a low humidity, it is necessary to bring the water vapor into contact with the air stream in the inlet of the air passageway at a relatively early stage. The region of the dried air in the central portion along the axis of the air passageway is also present on the downstream side relative to the inlet. The MEA positioned on the downstream side of the air passageway has a relatively large amount of the excess water. The water is sucked from this side of the MEA by the hydrophilic auxiliary member 72 and supplied by the hydrophilic member 71 to the upstream side. By the particular humidification, the dried region can be diminished as much as possible. The white arrows in FIG. 8A denote the flow direction of the air stream, and the size of the arrow denotes the flow speed of the air stream. Also, the arrow of the solid line in FIG. 8A denotes the flow direction of moisture. In FIG. 8B, the humidity distribution is represented by the gradation of monochromatic color. The black portion in FIG. 8B denotes the region having a high humidity, and the white portion denotes the region having a low humidity.

It is desirable for the length Y of the hydrophilic auxiliary member to be not smaller than 10 % to not larger than 50 % of the length X of the air passageway shown in FIG. 7. If the length Y of the hydrophilic auxiliary member noted above exceeds 50 % of the length X of the air passageway, the water in the MEA tends to be sucked excessively by the hydrophilic auxiliary member so as to lower the output characteristics of the fuel cell. On the other hand, if the length Y of the hydrophilic auxiliary member noted above is smaller than 10 % of the length X of the air passageway, it is difficult to humidify sufficiently the central portion in cross section of the air passageway.

The hydrophilic auxiliary member can be formed of the materials similar to those of the hydrophilic member described previously. It is also possible for the hydrophilic auxiliary member and the hydrophilic member to be formed unitedly.

FIG. 7 shows an example in which only one hydrophilic auxiliary member is mounted to the air passageway. However, the embodiment of the present invention is not limited to the particular example. It is also possible to mount a plurality of hydrophilic auxiliary members to the air passageway. FIG. 9 is an oblique view showing an air passageway having a plurality of hydrophilic auxiliary members mounted thereto. In FIG. 9, the air passageway is denoted by broken lines, and each of the hydrophilic member and the hydrophilic auxiliary member is denoted by solid lines.

As shown in FIG. 9, the sum of the areas of the hydrophilic auxiliary members 92 that are in contact with the hydrophilic member 91 and with the MEA 4 is made smaller on the upstream side and is made larger on the downstream side of the air passageway so as to decrease the water absorption on the upstream side and to increase the water absorption on the downstream side. In FIG. 9, the cathode is positioned below the air passageway 7. The hydrophilic auxiliary members 92 are arranged sparse in the vicinity of the inlet. Also, the hydrophilic auxiliary members 92 are arranged at a high density in the vicinity of the outlet so as to bring the hydrophilic auxiliary members 92 into contact with a larger region of the MEA. By arranging a plurality of hydrophilic auxiliary members 92 in this fashion, it is possible to make more uniform the wet state on the upstream side and the downstream side. FIG. 9 shows an example including 7 hydrophilic auxiliary members. However, the embodiment of the present invention is not limited to the particular example. This embodiment can be applied to the case of arranging three or more hydrophilic auxiliary members.

The ratio of the total length of a plurality of hydrophilic auxiliary members to the length of the hydrophilic member can be set to fall within the range described previously in conjunction with FIG. 7.

FIGS. 1 and 2 are directed to a fuel cell comprising a cathode passageway plate forming a plurality of air passageways extending in parallel. However, the present invention is not limited to the particular embodiment. This embodiment can also be applied to a cathode passageway plate forming a long single passageway. FIG. 10 shows the construction of a fuel cell comprising a cathode passageway plate for forming a long single passageway.

As shown in FIG. 10B, a long single groove 102 that is bent at a prescribed interval is formed in the entire region on one surface of a cathode passageway plate 101. A supply port 103 is provided at one edge of the groove 102 and a discharge port 104 is provided at the other edge of the groove 102. The cathode passageway plate 101 is arranged such that the open surface of the cathode passageway plate 101 is brought into contact with the cathode 1. As a result, a long single air passageway is formed between the groove 102 and the cathode 1.

An anode passageway plate 105 is substantially equal in construction to the cathode passageway plate 101. To be more specific, a single long groove 106 that is bent at a prescribed interval is formed in the entire region on one surface of the anode passageway plate 105. A supply port 107 is provided at one edge of the groove 106, and a discharge port 108 is provided at the other edge of the groove 106. The anode passageway plate 105 is arranged such that the open surface of the anode passageway plate 105 is brought into contact with the anode 2. In this fashion, a long single fuel passageway is formed between the groove 106 and the anode 2.

The electrolyte membrane 3 is formed larger than any of the cathode 1 and the anode 2. On the other hand, each of the cathode passageway plate 101 and the anode passageway plate 105 is substantially equal in size to the electrolyte membrane 3. An insulating gasket 9 is interposed between the electrolyte membrane 3 in the peripheral portion of the cathode 1 and the cathode passageway plate 101 so as to maintain the air tightness and the liquid tightness between the electrolyte membrane 3 and the cathode passageway plate 101. Likewise, an insulating gasket 109 is interposed between the electrolyte membrane 3 in the peripheral portion of the anode 2 and the anode passageway plate 105. Each of the anode passageway plate 105 and the cathode passageway plate 101 is connected to an external circuit 110. The electric power is taken out of the fuel cell by the external circuit 110.

It is possible for each of the cathode passageway plate and the anode passageway plate to be formed of, for example, carbon, resin, or metal.

Each of the cathode and the anode comprises a catalyst layer. The catalyst layer contains a supported catalyst in which a catalyst metal of Pt, Ru or an alloy thereof is supported by a support, and a proton conductive substance. The catalyst layer is supported by a gas diffusion layer (current collector) formed of, for example, a carbon sheet.

The electrolyte membrane contains the proton conductive substance. The proton conductive substance contained in the catalyst layer or the electrolyte membrane includes, for example, Nafion (registered trade mark, manufactured by Du Pont Inc.).

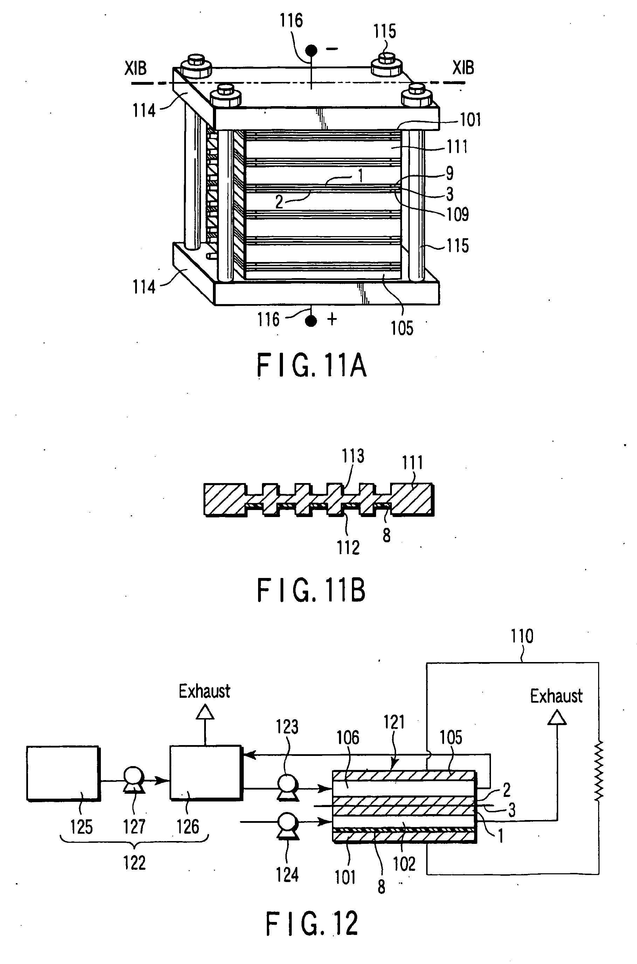

A fuel cell stack will now be described with reference to FIG. 11.

The fuel cell stack shown in FIG. 11 is prepared by stacking a plurality of fuel cells one upon the other. In the fuel cell stack, a separator 111 shown in FIG. 11B is arranged between the MEA 4 included in a fuel cell and the MEA 4 included in the adjacent fuel cell. The separator 111 corresponds to a unit structure including the anode passageway plate and the cathode passageway plate. A groove 112 forming an air passageway together with the cathode 1 is formed on one surface (lower surface in the drawing) of the separator 111. Also, a groove 113 forming a fuel passageway together with the anode 2 is formed on the other surface (upper surface in the drawing) of the separator 111. The hydrophilic member 8 is arranged on the bottom surface of the groove 112. In one of the MEA's 4 positioned on the outermost layer of the fuel cell stack, i.e., in the MEA positioned in the lowermost layer in the drawing, an anode passageway plate 105 is arranged on that side of the anode 1 which is opposite to the side on which the electrolyte membrane 3 is formed. Likewise, in one of the MEA's 4 positioned on the outermost layer of the fuel cell stack, i.e., in the MEA positioned in the uppermost layer in the drawing, the cathode passageway plate 101 is arranged on that side of the cathode 1 which is opposite to the side on which the electrolyte membrane 3 is formed. A plate 114 is formed on the outer surface of each of the anode passageway plate 105 and the cathode passageway plate 101. The stacked fuel cells are fixed by fastening the plates 114 by a fastening tool 115. Each of the plate 114 on the outer surface of the anode passageway plate 105 and the plate 114 on the outer surface of the cathode passageway plate 101 is connected to an external circuit 116. The electric power is taken out of each of the fuel cells by using the external circuit 116.

A fuel cell system will now be described with reference to FIGS. 12 to 14. The following description covers the case where a methanol aqueous solution is used as the fuel. However, it is possible to use another liquid fuel in the embodiment of the present invention.

The fuel cell system shown in FIG. 12 comprises a fuel cell 121, a fuel supply source 122, a fuel supply means 123 for supplying a liquid fuel from the fuel supply source 122 to a passageway 106 formed in the anode passageway plate 105, an air supply means 124 for supplying the air to the passageway 102 formed in the cathode passageway plate 101, and an external circuit 110 for taking an electric power from the fuel cell 121. The fuel supply source 122 comprises a fuel cartridge 125, a mixing tank 126, and a pump 127 for supplying the fuel from the fuel cartridge 125 to the mixing tank 126. The fuel is supplied from the mixing tank 126 to the passageway 106 formed in the anode passageway plate 105 by the fuel supply means 123. It is possible to use a pump as the fuel supply means 123. On the other hand, it is possible to use, for example, a pump or a fan equipped with a rotary vane as an air supply means 124. The water remaining in the anode 2 and the water generated in the cathode 1 and brought back to the anode 2 by the back flow is returned to the mixing tank 126. In the mixing tank 126, the fuel supplied from the fuel cartridge 125 is mixed with water. The mixed fuel is supplied from the anode passageway plate 105 to the anode 2. The water remaining in the cathode 1 is discharged in the form of a water vapor to the outer atmosphere together with the exhaust gas. The waste gas containing carbon dioxide, which is generated in the anode 2, is discharged from the mixing tank 126 into the outer atmosphere. It is possible to use the fuel cell 121 in the form of a fuel cell stack.

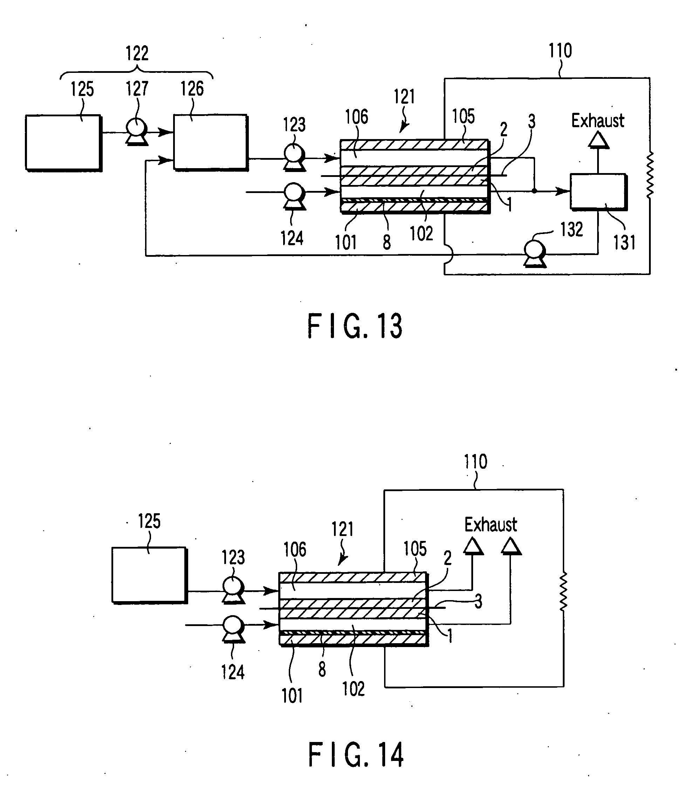

The fuel cell system shown in FIG. 13 comprises a condenser 131. The water remaining in the anode 2 and the carbon dioxide generated in the anode 2 are recovered by the condenser 131. Also, the water generated in the cathode 1 and the water flowing from the anode 2 to reach the cathode 1 are blown by the air so as to be recovered by the condenser 131 in the form of a liquid. The water condensed in the condenser 131 is returned to the mixing tank 126 by the pump 132. The waste gas is discharged from the condenser 131 into the outer atmosphere. In the fuel cell system shown in FIG. 13, it is possible to use a gas-liquid separator in place of the condenser 131.

A water circulation system is employed in the fuel cell system shown in each of FIGS. 12 and 13. In the water circulation system, the generated water is mixed with a methanol aqueous solution having a high methanol concentration so as to prepare a methanol aqueous solution having a low methanol concentration and, thus, adapted for the power generation, and the methanol aqueous solution of a low methanol concentration thus obtained is supplied to the anode. Therefore, it is convenient to use the water circulation system because the entire fuel cell system can be miniaturized. In this system, in which a cartridge is used for storing the fuel, a methanol aqueous solution having a high methanol concentration can be housed in the cartridge. Therefore, it is possible to'realize a compact system having a high energy density per unit volume and a good portability.

Also, as shown in FIG. 14, it is possible to provide a fuel cell system that does not recover water, in this system, a methanol aqueous solution having a low methanol concentration is in advance housed in the fuel cartridge 125. In this system, the water generated in the cathode 1 is discarded to the outside in the form of a water vapor together with the exhaust gas. The waste gas containing carbon dioxide generated in the anode 2 is also discarded from the anode 2 directly to the outside. In the fuel cell system shown in FIG. 14, it is possible to omit the mixing tank 126 and the pump 127 so as to use the fuel cartridge 125 alone as a fuel supply source.

In the fuel cell system shown in each of FIGS. 12 and 14, the water generated in the cathode 1 is discharged in the form of a water vapor together with the exhaust gas. As a result, the drying of the cathode 1 and the air passageway 102 tends to be promoted. Therefore, it is necessary to allow the cathode to retain water in a controlled amount such that the supply of oxygen is not inhibited as described previously. It should be noted in this connection that the technique of promoting the water discharge is disclosed in Japanese Patent Application KOKAI Publication No. 11-97041 and Japanese Patent Application KOKAI Publication No. 2002-20690 quoted previously. However, it is not desirable to employ the technique disclosed in these prior documents because, in this case, the cathode is deprived of water in an amount larger than required. According to the embodiment of the present invention, however, it is possible to remove efficiently the water droplet alone that clogs mainly the air passageway, i.e., the water droplet inhibiting the oxygen supply. Since the water droplet is removed efficiently, the air passageway can be secured in the embodiment of the present invention. In addition, the electromotive part is allowed to retain water appropriately, which is effective for the miniaturization and the safe operation of the DMFC.

FIGS. 12 to 14 are directed to a direct methanol fuel cell (DMFC) in which a methanol aqueous solution used as the fuel is supplied directly to the electromotive part. However, the present invention is not limited to the particular embodiment. In the present invention, it is possible for the fuel to be provided by a mixed solution prepared by mixing alcohol such as methanol, ethanol or propanol with water.

In the case of using the cathode passageway plate included in the fuel cell shown in FIG. 1, in which a plurality of grooves forming air passageways are formed in parallel, the clogging of the air passageway with the water droplets gives a decisive influence to the power generation, compared with the case of using the cathode passageway plate included in the fuel cell shown in FIGS. 10 to 14, in which a single passageway is formed. The particular phenomenon will now be described with reference to FIG. 15. The arrows of solid lines shown in FIG. 15 denote the flow direction of moisture.

In the cathode passageway plate 151 shown in FIGS. 15A and 15B, five grooves 152a to 152e are formed in parallel in a manner to extend from one edge to the other edge of the cathode passageway plate 151. On the other hand, in the cathode passageway plate 153 shown in FIGS. 15C and 15D, two grooves 154a and 154b are formed in parallel. Each of these grooves 154a and 154b is bent at a prescribed interval so as to cover the entire region of one surface of the cathode passageway plate 153. In the case of the cathode passageway plate 151 including a plurality of air passageways that are arranged in parallel as shown in FIGS. 15A and 15B, the air does not flow through the air passageways clogged with the water droplets, i.e., the air passageways corresponding to the grooves 152b, 152c and 154a, and the air flows through only the air passageways that are not clogged, i.e., the air passageways corresponding to the grooves 152a, 152d, 152e and 154b. Where the air is supplied at a high flow rate, the water is unlikely to be condensed within the passageway and, thus, the air passageway is unlikely to be clogged with the water droplet. Also, even if the passageway is clogged with the water droplet, the water droplet is pushed downward by the pressure elevation in the upstream region of the passageway so as to eliminate the clogging. In this case, however, the stack is expected to be cooled by the air stream flowing at a high flow rate so as to lower the stack temperature. It should also be noted that, since the membrane is deprived of water in an amount larger than required, it is possible for water to be lost from the MEA so as to lower the power generating efficiency. Under the circumstances, required is the passageway structure that may not be clogged with the water droplet continually under a low flow rate of the air.

It is conceivable to use a porous carbon for forming the cathode passageway plate so as to permit the wall of the passageway to suck water. However, the porous carbon is inferior to the dense carbon in mechanical strength. Therefore, the porous carbon is not adapted for use as a structural member of the stack requiring to be fastened. It is also conceivable to use a carbon material, which is not porous, having the surface subjected to the hydrophilic treatment. However, the carbon material subjected to the hydrophilic treatment gives rise to a problem in the durability of the hydrophilic nature. Such being the situation, the processing method that permits the processed material to exhibit a hydrophilic nature over a long period of time with a high stability has not yet been established.

In the embodiment of the present invention, it is possible to suppress the generation of water droplets within the air passageway even in the case where the air passageway of the fuel cell is branched from the air supply means into a plurality of air passageways. Such being the situation, it is possible to prevent the problem that the power generation is inhibited by the formation of water droplets. The effect produced by the embodiment of the present invention is rendered prominent in the case where a small fan equipped with rotary vanes and having a small static pressure, though the flow rate is high, is used as the air supply means.

Examples (not forming part of the invention)

Prepared was a cathode passageway plate having parallel grooves formed therein in a manner to extend from one edge to the other edge. The cross section of the groove was sized at 1 mm × 1 mm. A polyester unwoven fabric used as a hydrophilic member was attached to the bottom surface of the groove formed in the cathode passageway plate such that the hydrophilic member extended from the inlet to the outlet of the groove. In attaching the hydrophilic member, the both edges of the hydrophilic member were point-fixed with an adhesive. The open surface of the cathode passageway plate was stacked on the cathode side of the MEA so as to form air passageways. Further, an anode passageway plate was stacked on the anode side of the MEA, thereby manufacturing a fuel cell constructed as shown in FIG. 1. Four fuel cells were manufactured in this fashion and stacked one upon the other, followed by fastening the stacked structure by using a fastening tool so as to assemble a fuel cell system constructed as shown in FIG. 11.

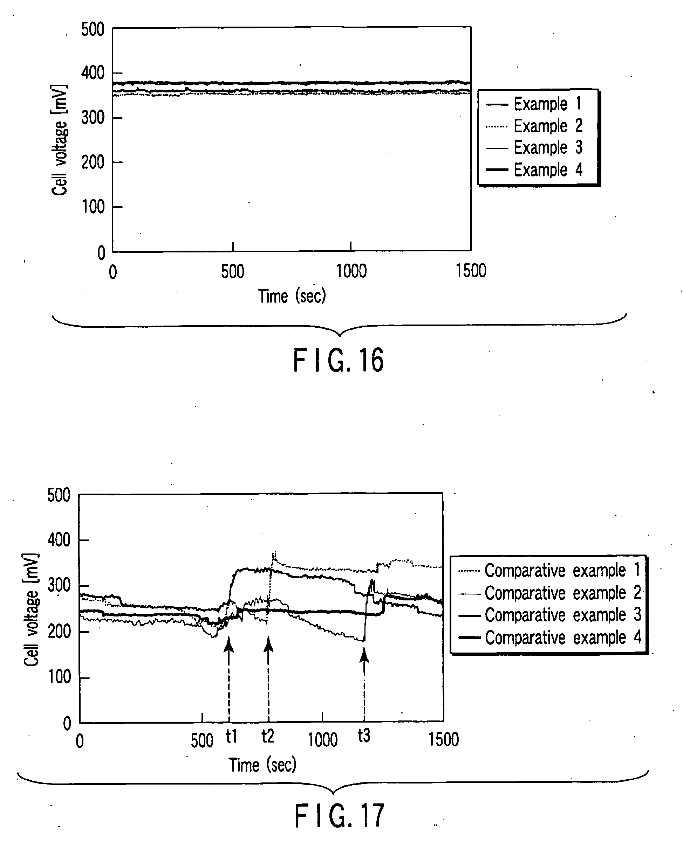

A methanol aqueous solution used as a fuel was supplied into the fuel passageway, and the air was supplied into the air passageway of the fuel cell stack at a flow rate of 10 cc/cm$^2$ so as to discharge the fuel cell under a constant current of 150 mA/cm$^2$. The fuel cell system shown in FIG. 12 was used as the supply system of the fuel and the air and as the discharge system of the waste gas. The cell voltage of each of the four fuel cells incorporated in the fuel cell stack was measured, and the output histories thereof are shown in FIG. 16 as Examples 1 to 4.

Comparative Examples

A fuel cell stack was assembled and operated as in the Examples described above, except that a hydrophilic member was not provided to the cathode passageway plate. The cell voltage of each of the four fuel cells incorporated in the fuel cell stack was measured, and the output histories thereof are shown in FIG. 17 as Comparative Examples 1 to 4. In the graph of each of FIGS. 16 and 17, the operating time (sec) is plotted on the abscissa, and the cell voltage (mV) is plotted on the ordinate. Incidentally, in Comparative Example 3, the suction was carried out for the air passageway from outside the fuel cell $t_1$ seconds after start-up of the discharge operation. In Comparative Example 1, the suction was carried out $t_2$ seconds after start-up of the discharge operation as Comparative Example 3. Further, in Comparative Example 2, the suction was carried out $t_3$ seconds after start-up of the discharge operation as Comparative Example 3. On the other hand, the suction was not carried out in the fuel cell for Comparative Example 4.

As apparent from FIG. 17, the cell voltage of the fuel cell for each of Comparative Examples 1 to 4 was lower that of the fuel cell for each of Examples 1 to 4. In addition, the nonuniformity in the cell voltage among the cells was large in the fuel cells for Comparative Examples 1 to 4. However, the output of the fuel cells for Comparative Examples 1 to 3 was restored when the water droplet clogging the cathode passageway plate of the fuel cell having a low output was removed by the suction from the outside. This clearly indicates that the low output of the fuel cells for Comparative Examples 1 to 4 was caused by the clogging of the air passageway formed in the cathode passageway plate with the water droplet.

On the other hand, in the fuel cell for each of Examples 1 to 4, the hydrophilic member was provided to that region on the inside surface of the air passageway which was apart from the cathode. As apparent from FIG. 16, the nonuniformity in the cell voltage among the fuel cells was small in the fuel cells for Examples 1 to 4. In addition, a stable output of a high voltage was obtained from the fuel cell for the Examples, supporting that the fuel cell for the Examples is excellent in the output characteristics.

A test similar to that of the Example was applied to a fuel cell substantially equal in construction to the fuel cell of the Example, except that a hydrophilic auxiliary member extending from a part of the edge of the hydrophilic member so as to be brought into contact with the cathode was formed on the air outlet side of the air passageway, and to a fuel cell substantially equal in construction to the fuel cell of the Example, except that a plurality of hydrophilic auxiliary members were provided such that the density of the hydrophilic auxiliary members was higher on the downstream side than on the upstream side. It was possible to obtain the output history similar to that shown in FIG. 16, supporting that the fuel cell was excellent in the output characteristics.

Additional advantages and modifications will readily occur to those skilled in the art. Therefore, the invention in its broader aspects is not limited to the specific details and representative embodiments shown and described herein but defined by the appended claims.

**Claims**

1. A fuel cell, comprising:

   an anode;
   a cathode;
   an electrolyte membrane arranged between the anode and the cathode;
   a cathode passageway plate for supplying the air to the cathode, including a groove which forms an air passageway together with the cathode;
   a hydrophilic member arranged on the inside surface of the groove and being apart from the cathode; and
   a hydrophilic auxiliary member arranged on at least the air outlet side of the air passageway and extending from a part of the edge of the hydrophilic member so as to be brought into contact with the cathode.

2. The fuel cell according to claim 1, wherein the hydrophilic member is positioned on that region of the inside surface of the groove which is faced to the cathode.

3. The fuel cell according to claim 1, wherein the hydrophilic member is positioned on that region of the inside surface of the groove which is faced to the cathode and on a side-wall or side-walls of the inside surface of the groove.

4. The fuel cell according to claim 1, further
   wherein the length of the hydrophilic auxiliary member is not smaller than 10 % to not larger than 50 % of the length of the air passageway.

5. A fuel cell system comprising:

   a fuel cell including an anode, a cathode, an electrolyte membrane arranged between the anode and the cathode, a cathode passageway plate for supplying the air to the cathode, including a groove which forms an air passageway together with the cathode, and a hydrophilic member arranged on the inside surface of the groove and being apart from the cathode;
   a fuel supply source;
   a fuel supply means for supplying a liquid fuel from the fuel supply source into the anode;
   an air supply means for supplying the air to the cathode passageway plate;
   an external circuit for taking out the electric power from the fuel cell; and
   a hydrophilic auxiliary member arranged on at least the air outlet side of the air passageway and extending from a part of the edge of the hydrophilic member so as to be brought into contact with the cathode.

6. The fuel cell system according to claim 5, wherein the hydrophilic member is positioned on that region of the inside surface of the groove which is faced to the cathode.

7. The fuel cell system according to claim 5,
   wherein the hydrophilic member is positioned on that region of the inside surface of the groove which is faced to the cathode and on a side-wall or side-walls of the inside surface of the groove.

8. The fuel cell system according to claim 5, further comprising a plurality of hydrophilic auxiliary members extending from a part of the edge of the hydrophilic member so as to be brought into contact with the cathode,
   wherein the plural hydrophilic auxiliary members are arranged such that the density of the hydrophilic auxiliary members on the downstream side is higher than that on the upstream side.

9. The fuel cell system according to claim 5, wherein the air passageway is formed of a single passageway having a single air inlet and a single air outlet.

10. The fuel cell system according to claim 5, wherein the cathode passageway plate includes a plurality of grooves arranged in parallel, and the air passageway is formed between each of these grooves and the cathode.

11. The fuel cell system according to claim 5, wherein the air supply means is constituted of a fan equipped with rotary vanes.

**Patentansprüche**

1. Brennstoffzelle umfassend:

   eine Anode;
   eine Kathode;
   eine Elektrolytmembran, die zwischen der Anode und der Kathode angeordnet ist;
   eine Kathodendurchgangsplatte zum Zuführen von Luft zu der Kathode, die eine Kerbe beinhaltet, die zusammen mit der Kathode einen Luftdurchgang bildet;
   ein hydrophiles Element, das an der Innenoberfläche der Kerbe angeordnet und von der Kathode getrennt ist; und
   ein hydrophiles Hilfselement, das zumindest an der Luftauslassseite des Luftdurchgangs angeordnet ist und sich von einem Teil des Randes des hydrophilen Elements so erstreckt, dass es mit der Kathode in Kontakt gebracht ist.

2. Brennstoffzelle nach Anspruch 1, bei der das hydrophile Element an dem Bereich der Innenoberfläche der Kerbe angeordnet ist, welcher der Kathode gegenüberliegt.

3. Brennstoffzelle nach Anspruch 1, bei der das hydrophile Element an dem Bereich der Innenoberfläche der Kerbe, welcher der Kathode gegenüberliegt, und an einer Seitenwand oder Seitenwänden der Innenoberfläche der Kerbe angeordnet ist.

4. "Brennstoffzelle nach Anspruch 1, bei der ferner die Länge des hydrophilen Hilfselements nicht kleiner als 10% bis nicht größer als 50% der Länge des Luftdurchgangs ist.

5. Brennstoffzellensystem umfassend:

   eine Brennstoffzelle, die eine Anode, eine Kathode, eine Elektrolytmembran, die zwischen der Anode und der Kathode angeordnet ist, eine Kathodendurchgangsplatte zum Zuführen von Luft zu der Kathode, die eine Kerbe beinhaltet, die zusammen mit der Kathode einen Luftdurchgang bildet, und ein hydrophiles Element, das an der Innenoberfläche der Kerbe angeordnet und von der Kathode getrennt ist, beinhaltet;
   eine Brennstoffzuführquelle;
   ein Brennstoffzuführmittel zum Zuführen eines flüssigen Brennstoffs von der Brennstoffzoführquelle in die Anode;
   ein Luftzuführmittel zum Zuführen der Luft zu der Kathodendurchgangsplatte;
   eine äußere Schaltung zum Entnehmen der elektrischen Leistung aus der Brennstoffzelle; und
   ein hydrophiles Hilfselement, das zumindest an der Luftauslassseite des Luftdurchgangs angeordnet ist und sich von einem Teil des Randes des hydrophile Elements so erstreckt, dass es mit der Kathode in Kontakt gebracht ist.

6. Brennstoffzellensystem nach Anspruch 5, bei dem das hydrophile Element an dem Bereich der Innenoberfläche der Kerbe angeordnet ist, welcher der Kathode gegenüberliegt.

7. Brennstoffzellensystem nach Anspruch 5, bei dem das hydrophile Element an dem Bereich der Innenoberfläche der Kerbe, welcher der Kathode gegenüberliegt, und an einer Seitenwand oder Seitenwänden der Innenoberfläche der Kerbe angeordnet ist.

8. Brennstoffzellensystem nach Anspruch 5, das ferner mehrere hydrophile Hilfselemente umfasst, die sich von einem Teil des Randes des hydrophilen Elements so erstrecken, dass sie mit der Kathode in Kontakt gebracht sind, wobei die mehreren hydrophilen Hilfselemente so angeordnet sind, dass die Dichte der hydrophilen Hilfselemente an der stromabwärtigen Seite höher als die an der stromaufwärtigen Seite ist.

9. Brennstoffzellensystem nach Anspruch 5, bei dem der Luftdurchgang aus einem einzelnen Durchgang gebildet ist, der einen einzelnen Lufteinlass und einen einzelnen Luftauslass aufweiset.

10. Brennstoffzellensystem nach Anspruch 5, bei dem die Kathodendurchgangsplatte mehrere parallel angeordnete Kerben beinhaltet und der Luftdurchgang zwischen jeder dieser Kerben und der Kathode ausgebildet ist.

11. Brennstoffzellensystem nach Anspruch 5, bei dem das Luftzuführmittel aus einem mit Drehschiebern versehenen Lüfter besteht.

**Revendications**

1. Pile à combustible, comprenant :

   une anode ;
   une cathode ;
   une membrane à électrolyte agencée entre l'anode et la cathode ;
   un plateau de passage de cathode pour alimenter la cathode en air, comprenant une rainure qui forme un passage d'air conjointement avec la cathode ;
   un organe hydrophile agencé sur la surface intérieure de la rainure et séparé de la cathode ; et
   un organe auxiliaire hydrophile agencé au moins du côté sortie d'air du passage d'air et s'étendant depuis une partie du bord de l'organe hydrophile de manière à être mis en contact avec la cathode.

2. Pile à combustible selon la revendication 1, dans laquelle l'organe hydrophile est positionné sur la région de la surface intérieure de la rainure qui fait face à la cathode.

3. Pile à combustible selon la revendication 1, dans laquelle l'organe hydrophile est positionné sur la région de la surface intérieure de la rainure qui fait face à la cathode et sur une paroi latérale ou des parois latérales de la surface intérieure de la rainure.

4. Pile à combustible selon la revendication 1, dans laquelle la longueur de l'organe auxiliaire hydrophile n'est pas inférieure à 10 % et pas supérieure à 50 % de la longueur du passage d'air.

5. Système de pile à combustible comprenant:

   une pile à combustible comprenant une anode, une cathode, une membrane à électrolyte agencée entre l'anode et la cathode, un plateau de passage de cathode pour alimenter la cathode en air, comprenant une rainure qui forme un passage d'air conjointement avec la cathode, et un organe hydrophile agencé sur la surface intérieure de la rainure et séparé de la cathode ;
   une source d'alimentation en combustible ;
   un moyen d'alimentation en combustible pour alimenter l'anode en un combustible liquide depuis la source d'alimentation en combustible ;
   un moyen d'alimentation en air pour alimenter le plateau de passage de cathode en air ;
   un circuit externe pour extraire l'alimentation électrique de la pile à combustible ; et
   un organe auxiliaire hydrophile agencé au moins du côté sortie d'air du passage d'air et s'étendant depuis une partie du bord de l'organe hydrophile de manière à être mis en contact avec la cathode.

6. Système de pile à combustible selon la revendication 5, dans lequel l'organe hydrophile est positionné sur la région de la surface intérieure de la rainure qui fait face à la cathode.

7. Système de pile à combustible selon la revendication 5, dans lequel l'organe hydrophile est positionné sur la région de la surface intérieure de la rainure qui fait face à la cathode et sur une paroi latérale ou des parois latérales de la surface intérieure de la rainure,

8. Système de pile à combustible selon la revendication 5, comprenant en outre une pluralité d'organes auxiliaires hydrophiles s'étendant depuis une partie du bord de l'organe hydrophile de manière à être mis en contact avec la cathode,
   dans lequel la pluralité d'organes auxiliaires hydrophiles est agencée de sorte que la densité des organes auxiliaires hydrophiles du côté aval est supérieure à celle du côté amont.

9. Système de pile à combustible selon la revendication 5, dans lequel le passage d'air est formé d'un passage unique comportant une entrée d'air unique et une sortie d'air unique.

10. Système de pile à combustible selon la revendication 5, dans lequel le plateau de passage de cathode comprend une pluralité de rainures agencées en parallèle, et le passage d'air est formé entre chacune de ces rainures et la cathode.

**11.** Système de pile combustible selon la revendication 5, dans lequel le moyen d'alimentation en air est constitué d'un ventilateur équipé de pales rotatives.

FIG.1A

FIG.1B

FIG.2A

FIG.2B

FIG.3A

Before operation

At start-up

During steady operation

FIG.3B

Before operation

At start-up

During steady operation

FIG. 3C

Before operation

At start-up

During steady
operation

FIG. 3D

Before operation

At start-up

During steady
operation

θ

θ > 90°

## F I G. 4A

θ

θ = 90°

## F I G. 4B

θ

θ < 90°

## F I G. 4C

## F I G. 5A

## F I G. 5B

61

C

B

A

1   3

7

## F I G. 6

71

72

X

Y

7

## F I G. 7

21

XIIIB

Region having a low flow rate

22

Region having a high flow rate

Region having a low flow rate

1

XIIIB

## F I G. 8A

Peripheral portion — High humidity

Central portion — Low humidity

22

## F I G. 8B

91

Upstream side

Downstream side

92

7

## F I G. 9

FIG. 10A

FIG. 10B

EP 1 952 472 B1

FIG.11A

FIG.11B

FIG.12

F I G. 13

F I G. 14

23

FIG. 15A

FIG. 15B

FIG. 15C

FIG. 15D

FIG. 16

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11097041 A
- JP 2002020690 A
- EP 0929112 A
- US 5935725 A
- US 6015633 A
- JP 10172586 A